# EUROPEAN PATENT SPECIFICATION

(11) **EP 3 501 265 B1**
(45) Date of publication and mention of the grant of the patent: **26.07.2023**
(21) Application number: 17382883.1
(22) Date of filing: 21.12.2017
(51) Int. Cl.: A01G 9/12

(54) **STRIP COMPRISING MULTIPLE PLANT SUPPORT UNITS FOR SUPPORTING A PLANT STEM OF A PLANT**
STREIFEN MIT MEHREREN PFLANZENSTÜTZEINHEITEN ZUR UNTERSTÜTZUNG EINES PFLANZENSTAMMES EINER PFLANZE
BANDE COMPRENANT DE MULTIPLES UNITÉS DE SUPPORT DE PLANTE POUR SUPPORTER UNE TIGE DE PLANTE D'UNE PLANTE

(43) Date of publication of application: 26.06.2019
(73) Proprietor: A. Raymond et Cie, 38000 Grenoble (FR)
(72) Inventor: Romera Beltran, Francesc, 08241 Manresa (ES); Pérez Miñarro, Miquel, 08222 Terrassa (ES)
(74) Representative: EP&C

(56) References cited:
- DE-A1- 1 482 996
- GB-A- 864 348
- NL-C2- 1 030 550

## Description

### FIELD OF INVENTION

The invention relates to a plant support unit for supporting a plant stem of a plant. In practise, these plant support units are placed around plant stems in order to facilitate and guide the growing plant. Examples of plant support units are disclosed in NL1030550C, GB864348 and DE1482996.

Known plant support units are in general provided in a box while being positioned randomly in bulk formation. The user has to manually take a plant support unit from the box, fixate it to a cylindrical support located near the plant and place the plant support unit around the plant stem. To achieve this, the user has to grab, decollate, and orientate the clip from the reservoir before it can be placed around the plant stem.

### BACKGROUND OF THE INVENTION

The invention is based on the insight that the user has to perform a relatively time consuming operation to grab the known plant support units from the box and place them around the plant stems. In addition, the invention is based on the insight that the known clips are inefficiently stored in the box.

### SUMMARY OF THE INVENTION

The invention has the objective to provide improved or alternative plant support units which can be grabbed and placed around the plant stem in a more efficient manner and can be stored in a more efficient manner.

This objective is achieved by a strip according to claim 1.

For the user it is relatively easy to grab the strip having multiple plant support units out of a box when compared with grabbing individual plant support units. Since the connecting members are manually breakable, the user can separate one of the plant support units from the strip with his/her hands without using any equipment. The plant support units all have the same orientation in the strip, and the user therefore knows (even without looking) how the separated plant support unit is positioned in his/her hands. This facilitates the user in fixing the fixing portion to the cylindrical support and placing the support portion in the support loop position around the plant stem of the plant in an efficient manner.

According to the invention, the connecting members are attached to the fixing portions of neighbouring plant support units or to the attached ends of neighbouring plant support units.

According to the invention, a fixing portion stiffness of the fixing portions is larger than a support portion stiffness of the support portions.

In an embodiment of the strip, the fixing portions have a fixing portion thickness, the support portions have a support portion thickness, the fixing portion thickness and the support portion thickness are measured in a direction perpendicular to the longitudinal space axis, and the fixing portion thickness is larger than the support portion thickness.

In an embodiment of the strip, the fixing portion thickness is between, and including, 2 and 5 times, preferably between, and including, 3 and 4 times, larger than the support portion thickness.

In an embodiment of the strip, the connecting members comprise a weakened area to facilitate the manually breaking of the connecting members.

In an embodiment of the strip, the weakened area comprises a weakening recess.

In an embodiment of the strip, the connecting members have a second connection member thickness at its weakened area, which second connecting member thickness is smaller than a first connecting member thickness at other areas of the connecting members.

In an embodiment of the strip, each plant support units is integrally formed and the connecting members are attached to the plant support units and not integrally formed with the plant support units.

In an embodiment of the strip, the connecting members and the plant support units are integrally formed as a single piece.

In an embodiment of the strip, the strip is integrally formed as a single piece.

In an embodiment of the strip, the connecting members are aligned along a straight member line.

In an embodiment of the strip, the connecting members are connecting rods, more specifically flexible connecting rods.

In an embodiment of the strip, the straight member line is a straight rod centre line.

In an embodiment of the strip, the connecting rods are interconnected to form a larger rod extending along the plant support units.

In an embodiment of the strip, the longitudinal space axes of the inner spaces are aligned.

In an embodiment of the strip, the fixing portions surround more than 50% of their respective inner space.

In an embodiment of the strip, the fixing portions comprise an inner engaging surface configured to in use be in contact with and engaging an outer surface of the cylindrical support.

In an embodiment of the strip, the support portions extend parallel to each other in a same support direction away from the fixing portions.

In an embodiment of the strip, the support portions extend along a same support length from the attached end to the free end.

In an embodiment of the strip, the cooperating locking members comprise at least one through hole provided in the support portion and a locking protrusion provided on the fixing portion, which locking protrusion is configured to extend through the at least one through hole to hold the support portion in the support loop position.

In an embodiment of the strip, the fixing portion comprises an outer fixing surface and the locking protrusion extends away from the outer fixing surface.

In an embodiment of the strip, the locking protrusion comprises a base part attached to the outer fixing surface and extending away from the outer fixing surface, a first transversal part extending transversely away from the base part in a first transversal direction at a first part distance from the outer fixing surface, and a second transversal part extending transversely away from the base part in a second transversal direction at a second part distance from the outer fixing surface.

In an embodiment of the strip, the second transversal direction is opposite to the first transversal direction.

In an embodiment of the strip, the first transversal direction and the second transversal direction extend perpendicular to the longitudinal space axis.

In an embodiment of the strip, the attached end of the support portion is attached to the outer fixing surface of the fixing portion.

In an embodiment of the strip, the support portion comprises an inner support surface and an outer support surface.

In an embodiment of the strip, the fixing portion is attached to the inner support surface.

In an embodiment of the strip, the inner support surface is directed to an inside of the closed loop and the outer support surface is directed to an outside of the closed loop, when the support portion is positioned in the support loop position.

In an embodiment of the strip, the strip comprises between, and including, 2 and 10 plant support units, preferably between, and including, 3 and 8 plant support units, and more preferably between, and including, 4 and 6 plant support units.

In an embodiment of the strip, the strip comprises the features of any combination of any number of the above defined embodiments of the strip.

The invention also relates to a kit of parts comprising a strip according to the invention and a cylindrical support, wherein the fixing portions are configured to engage the cylindrical support.

In addition, the invention relates to a box holding a stack of multiple strips according to the invention, wherein the strips are positioned on top of each other in sets of two strips, and in each of said sets the inner support surfaces of the two strips are facing each other and the fixing portions of one strip are positioned at the free ends of the other strip and the free ends of said one strip are positioned at the fixing portions of said other strip.

This way a high packing degree of the strips in the box is achieved. In addition, it is predictable for the user how the strips are positioned when they are taken out of the box, for example one by one or set by set.

In an embodiment of the box, the sets of two strips are placed with their respective outer support surfaces on top of each other.

### BRIEF DESCRIPTION OF THE INVENTION

Embodiments of the strip, the kit of parts, and the box holding the stack of strips according to the invention will be described by way of example only, with reference to the accompanying schematic drawings in which corresponding reference symbols indicate corresponding parts, and in which:
Figure 1 schematically shows a first view in perspective of an embodiment of the strip according to the invention,
Figure 1A schematically shows an enlarged view of part of figure 1,
Figure 2 schematically shows a second view in perspective of the strip of figure 1,
Figure 2A schematically shows an enlarged view of part of figure 2,
Figure 3 schematically shows a top view of the part shown in figure 2,
Figure 4 schematically shows a front view of the strip of figure 1,
Figure 5 schematically shows a rear view of the strip of figure 1,
Figure 6A schematically shows a first view in perspective of a plant support unit being separated from the strip of figure 1,
Figure 6B schematically shows a second view in perspective of the plant support unit of figure 6A,
Figure 7 schematically shows a top view of the plant support unit of figure 6 being fixated to a cylindrical support and placed in the support loop position around a plant stem of a plant,
Figure 8 schematically shows a view in perspective of the plant support unit of figure 7,
Figure 9 schematically shows a side view of a stack of strips according to figure 1 located in a box, and
Figure 10 schematically shows a view in perspective of an alternative embodiment of the strip according to the invention.

### DETAILED DESCRIPTON OF THE INVENTION

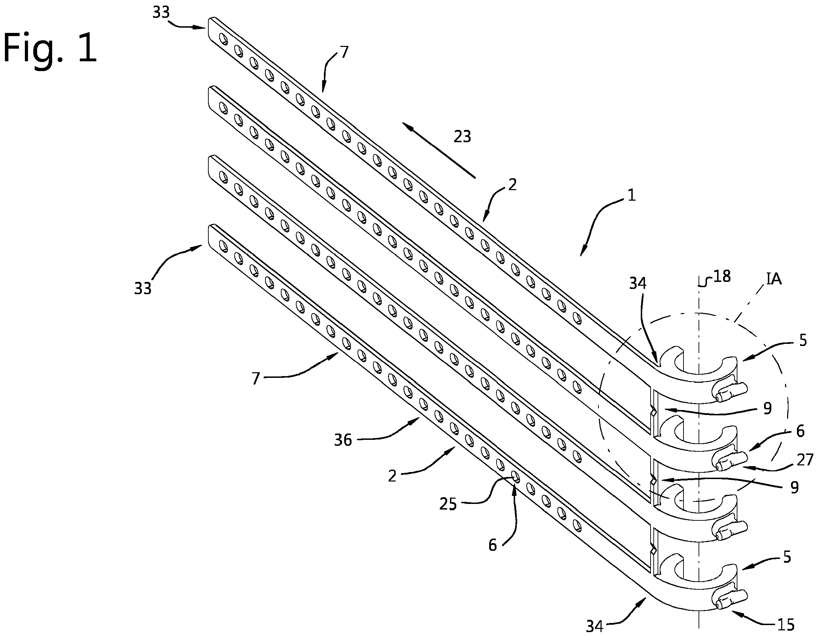

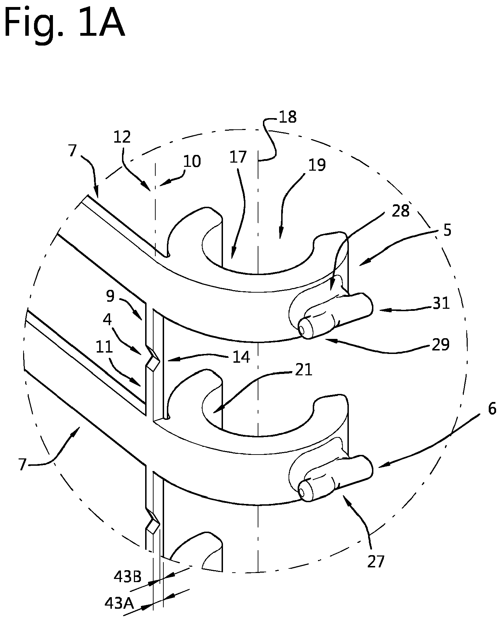

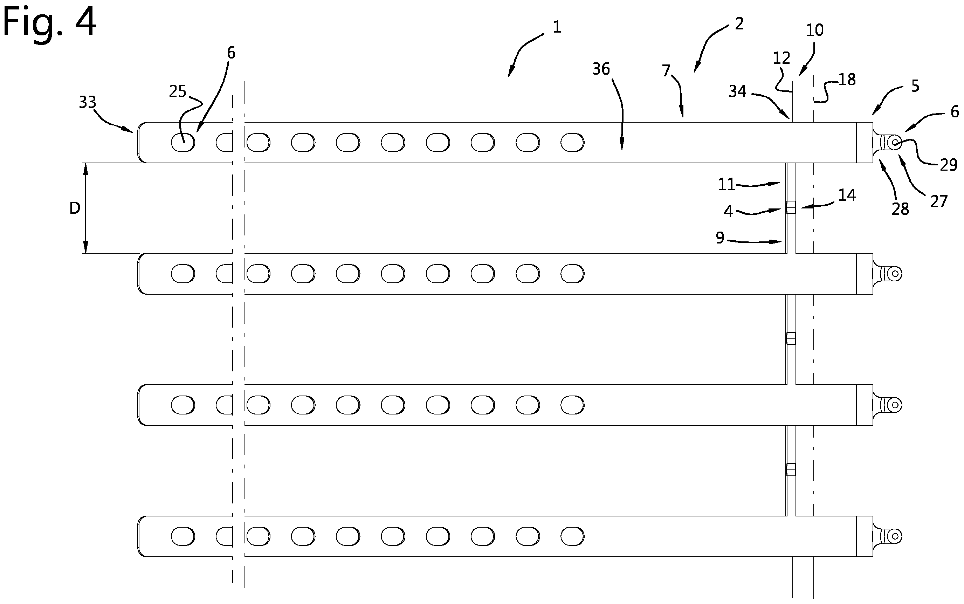

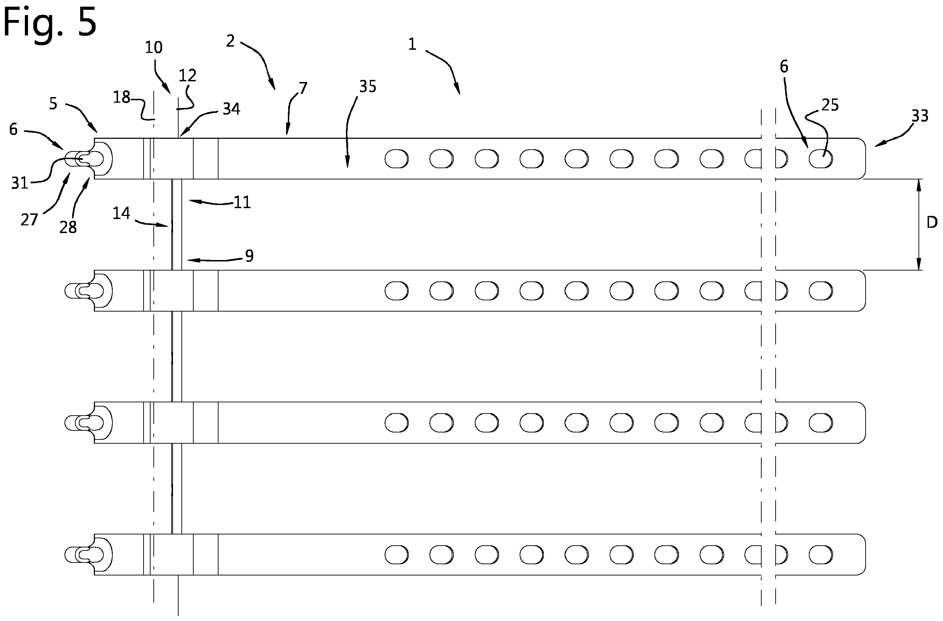

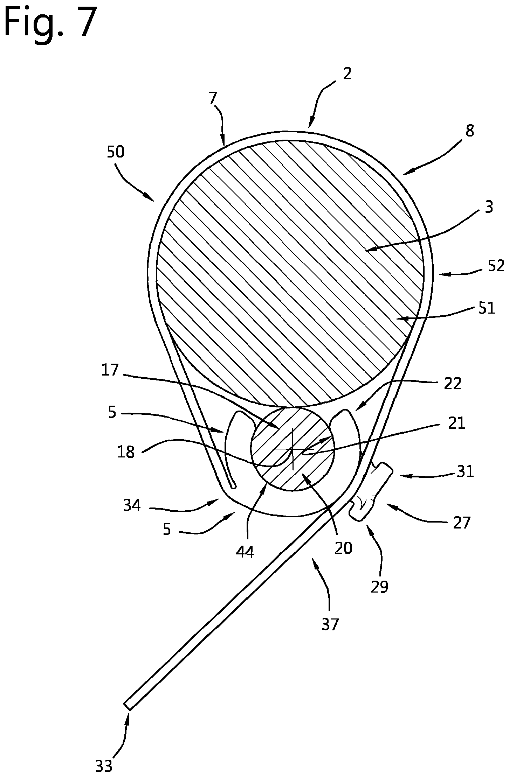

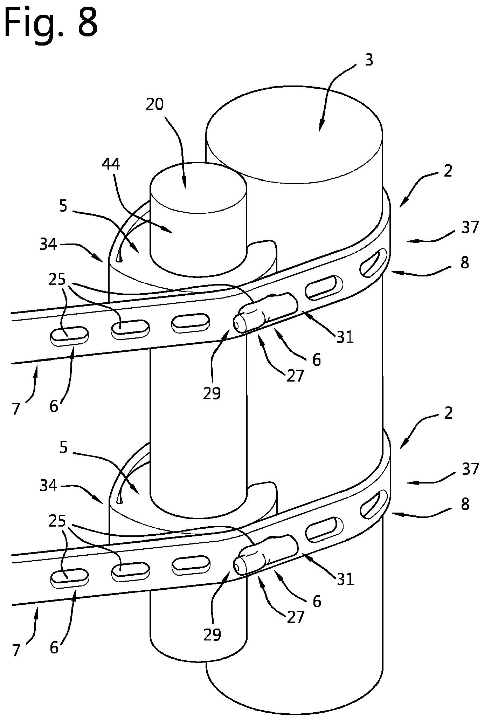

The figures 1-5 show different views of an embodiment of the strip 1 according to the invention. The strip 1 comprising multiple plant support units 2 for supporting a plant stem 3 of a plant (see also the figures 7 and 8). Each plant support unit 2 comprises a fixing portion 5, a flexible elongate support portion 7, and cooperating locking members 6.

The fixing portion 5 is configured to engage a cylindrical support 20 received in an cylindrical inner space 17 having a longitudinal space axis 18 and being partly surrounded by the fixing portion 5 having an annular form and a radial opening 19 to provide access to the inner space 17. The flexible elongate support portion 7 extends from an attached end 34 being attached to the fixing portion 5 to a free end 33. The cooperating locking members 6 are configured to lock the support portion 7 in an support loop position 8 in which the plant support unit 2 forms a closed loop to support the plant stem 3 (see also the figures 7 and 8).

The plant support units 2 are positioned one after the other with a same orientation and at a distance D from each other. Neighbouring plant support units 2 are interconnected by a manually breakable connecting member 9.

For the user it is relatively easy to grab the strip 1 having multiple plant support units 2 out of a box 38 when compared with grabbing individual plant support units. Since the connecting members 9 are manually breakable, the user can separate one of the plant support units 2 from the strip 1 with his/her hands without using any equipment. The plant support units 2 all have the same orientation in the strip 1, and the user therefore knows (even without looking) how the separated plant support unit 2 is positioned in his/her hands. This facilitates the user in fixing the fixing portion 5 to the cylindrical support 20 and placing the support portion 7 in the support loop position 8 around the plant stem 3 of the plant in an efficient manner.

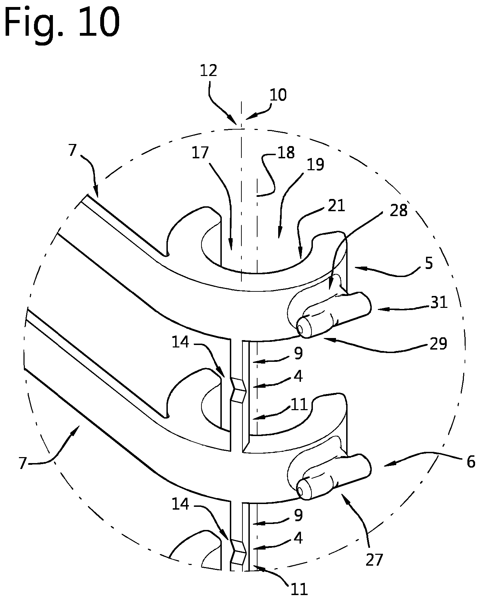

The connecting members 9 are attached to the attached ends 34 of neighbouring plant support units 2. In an alternative embodiment of the strip shown in figure 10, the connecting members 9 are attached to the fixing portions 5 of neighbouring plant support units 2. The fixing portions 5 and the attached ends 34 are the parts of the plant support units 2 having a higher stiffness when compared with the rest of the plant support units 2. This facilitates the manually breaking of the connecting members 9. The user can hold these parts with a higher stiffness in their hands in order to manually apply a breaking force on the connecting member 9.

A fixing portion stiffness of the fixing portion 5 is larger than a support portion stiffness of the support portion 7. Since the attached end 34 of the support portion 7 is attached to the fixing portion 5, the attached end 34 has a higher stiffness when compared with the rest of the support portion 7.

The fixing portion 5 comprises a fixing portion thickness 41. The support portion 7 comprises a fixing portion thickness 42. The fixing portion thickness 41 and the fixing portion thickness 42 are measured in a direction perpendicular to the longitudinal space axis 18. The fixing portion thickness 41 is larger than the fixing portion thickness 42.

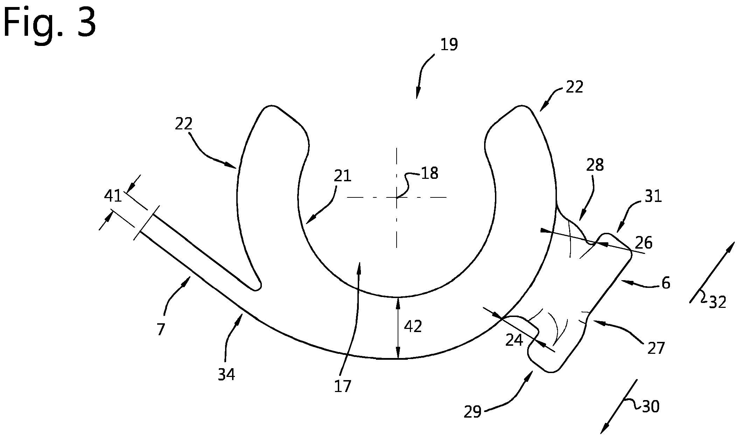

The fixing portion thickness 41 is about 3 times larger than the fixing portion thickness 42 (see figure 3). In alternative embodiments, the fixing portion thickness 41 is between, and including, 2 and 5 times, or between, and including, 3 and 4 times, larger than the fixing portion thickness 42.

The connecting member 9 comprises a weakened area 14 to facilitate the manually breaking of the connecting member 9. The weakened area 14 comprises a weakening recess 4. The connecting member 9 has a second connecting member thickness 43B at its weakened area 14, which second connecting member thickness 43B is smaller than a first connecting member thickness 43A at other areas of the connecting member 9 (see figure 1A).

The connecting members 9 and the plant support units 2 are integrally formed as a single piece 15. More specifically, the strip 1 is integrally formed as a single piece 15. In alternative embodiments, each plant support units 2 is integrally formed and the connecting members 9 are attached to the plant support units 2 and not integrally formed with the plant support units 2.

The connecting members 9 are aligned along a straight member line 10. The connecting members 9 are connecting rods 11, more specifically flexible connecting rods 11. The straight member line 10 is a straight rod centre line 12. In alternative embodiments, the connecting rods 11 are interconnected to form a larger rod extending along the plant support units 2.

The longitudinal space axes 18 of the inner spaces 17 are aligned. The fixing portions 5 surround more than 50% of their respective inner space 17.

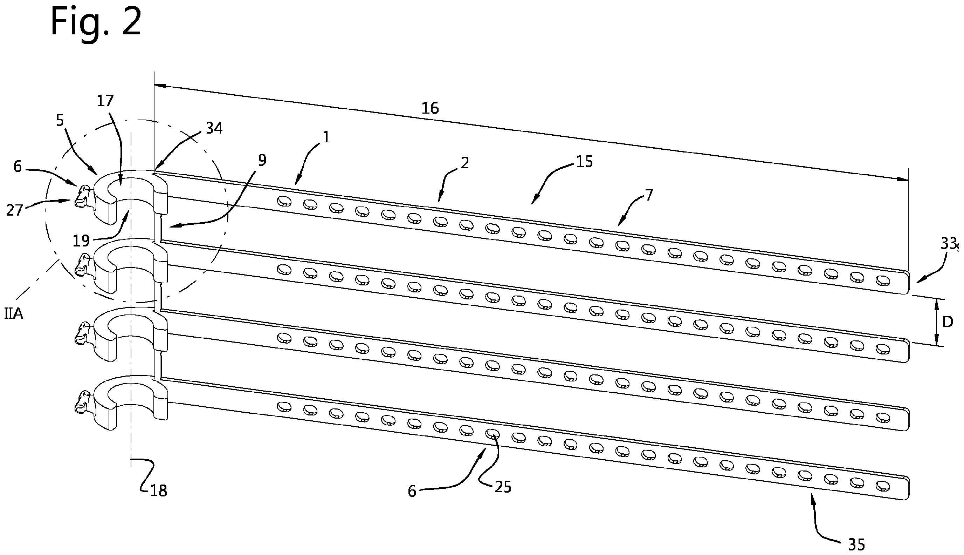

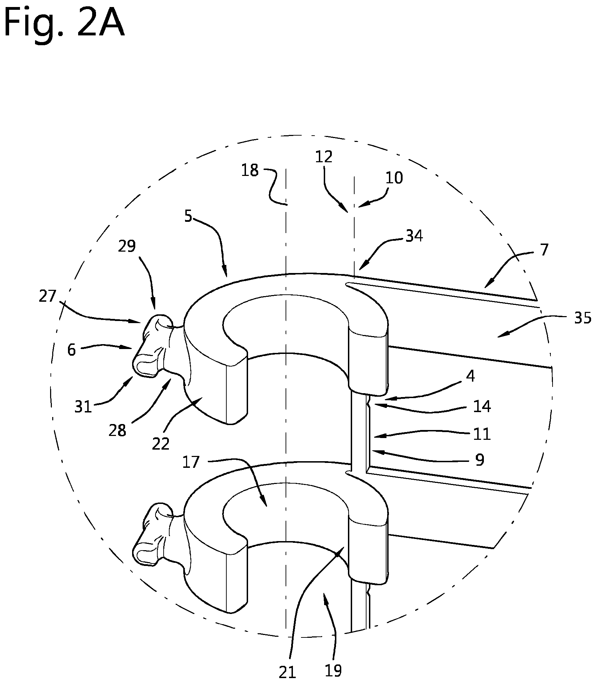

The support portions 7 extend parallel to each other in a same support direction 23 away from the fixing portions 5. The support portions 7 extend along a same support length 16 from the attached end 34 to the free end 33 (see figure 2).

The cooperating locking members 6 comprise at least one through hole 25 provided in the support portion 7 and a locking protrusion 27 provided on the fixing portion 5, which locking protrusion 27 is configured to extend through the at least one through hole 25 to hold the support portion 7 in the support loop position 8 (see the figures 7 and 8).

The fixing portion 5 comprises an outer fixing surface 22 and the locking protrusion 27 extends away from the outer fixing surface 22 (see figure 1A). The locking protrusion 27 comprises a base part 28, a first transversal part 29, and a second transversal part 31. The base part 28 is attached to the outer fixing surface 22 and extends away from the outer fixing surface 22. The first transversal part 29 extends transversely away from the base part 28 in a first transversal direction 30 at a first part distance 24 from the outer fixing surface 22. The second transversal part 31 extends transversely away from the base part 28 in a second transversal direction 32 at a second part distance 26 from the outer fixing surface 22. The second transversal direction 32 is opposite to the first transversal direction 30. The first transversal direction 30 and the second transversal direction 32 extend perpendicular to the longitudinal space axis 18.

The attached end 34 of the support portion 7 is attached to the outer fixing surface 22 of the fixing portion 5. The support portion 7 comprises an inner support surface 35 and an outer support surface 36. The fixing portion 5 is attached to the inner support surface 35. The inner support surface 35 is directed to an inside 51 of the closed loop 50 and the outer support surface 36 is directed to an outside 52 of the closed loop 50, when the support portion 7 is positioned in the support loop position 8. The strip 1 comprises 4 plant support units. In alternative embodiments, the strip 1 comprises between, and including, 2 and 10 plant support units, preferably between, and including, 3 and 8 plant support units, and more preferably between, and including, 4 and 6 plant support units.

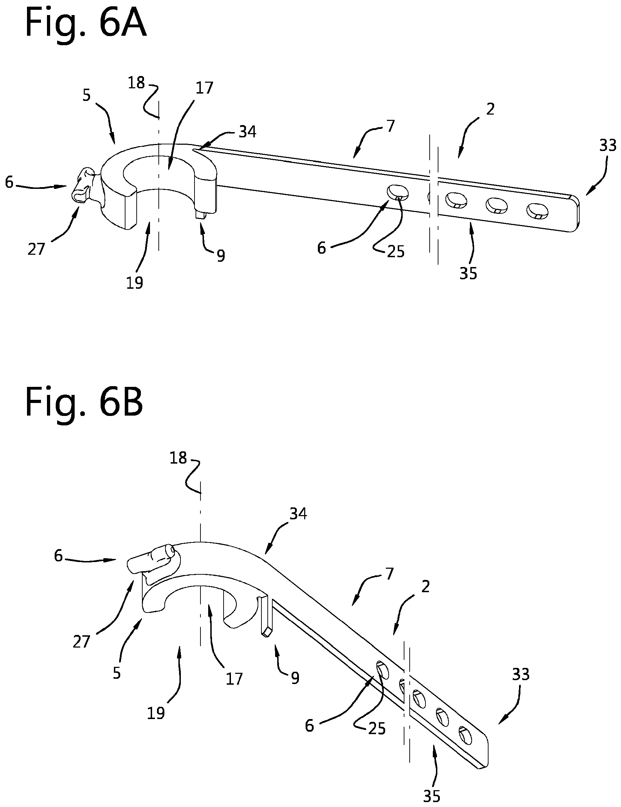

The figures 6A and 6B show a plant support unit 2 being separated from the strip 1 of figure 1 by manually breaking one of the connection members 9.

The figures 7 and 8 show the plant support unit 2 of figure 6 being fixated to a cylindrical support 20 and placed in the support loop position 8 around a plant stem 3 of a plant. These figures also show a kit of parts 37 comprising the strip 1 according to figure 1 and the cylindrical support 20, wherein the fixing portions 5 are configured to engage the cylindrical support 20.

The fixing portions 5 comprise an inner engaging surface 21 configured to in use be in contact with and engaging an outer surface 44 of the cylindrical support 20.

The locking members 6 lock the plant support units 2 in the support loop position 8 in order to support the plant stem 3 with help of the cylindrical support 20. The plant stem 3 is surrounded by the closed loop 50 formed by the plant support units 2 positioned in the support loop position 8.

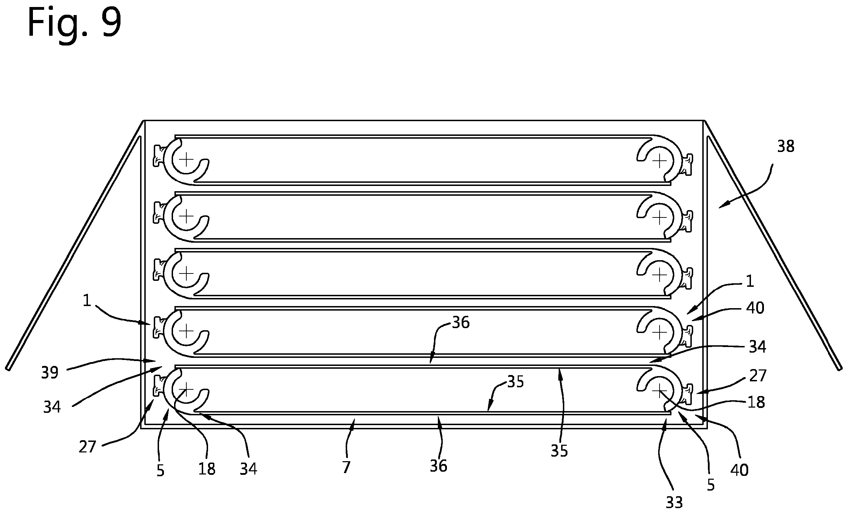

Figure 9 shows a side view of stack 39 of strips 1 according to figure 1 located in a box 38. The inside of the box 38 is shown to obtain a clear view on how the strips 1 are stack 39. The strips 1 are positioned on top of each other in sets 40 of two strips 1, and in each of said sets 40 the inner support surfaces 35 of the two strips 1 are facing each other and the fixing portions 5 of one strip 1 are positioned at the free ends 33 of the other strip 1 and the free ends 33 of said one strip 1 are positioned at the fixing portions 5 of said other strip 1. The sets of two strips 1 are placed with their respective outer support surfaces 36 on top of each other.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

It will be apparent to those skilled in the art that various modifications can be made to the strip, the kit of parts, and the box holding a stack of strips without departing from the scope as defined in the claims.

## Claims

1. Strip (1) comprising multiple plant support units (2) for supporting a plant stem (3) of a plant, wherein each plant support unit comprises;
- a fixing portion (5) configured to engage a cylindrical support (20) received in an cylindrical inner space (17) having a longitudinal space axis (18) and being partly surrounded by the fixing portion having an annular form and a radial opening (19) to provide access to the inner space, and
- a flexible elongate support portion (7) extending from an attached end (34) being attached to the fixing portion to a free end (33), wherein
-- the plant support units are positioned one after the other with a same orientation and at a distance D from each other, and
-- neighbouring plant support units are interconnected by a manually breakable connecting member (9), **characterised in that**
--- each plant support unit (2) comprises cooperating locking members (6) to lock the support portion in an support loop position (8) in which the plant support unit forms a closed loop to support the plant stem,
--- a fixing portion stiffness of the fixing portions (5) is larger than a support portion stiffness of the support portions (7), and
--- the connecting members (9) are attached to the fixing portions (5) of neighbouring plant support units or to the attached ends (34) of neighbouring plant support units.

2. Strip according to claim 1, wherein
- the fixing portions have a fixing portion thickness,
- the support portions have a support portion thickness,
- the fixing portion thickness (41) and the support portion thickness (42) are measured in a direction perpendicular to the longitudinal space axis, and
- the fixing portion thickness is larger than the support portion thickness.

3. Strip according to any one of the preceding claims, wherein the connecting members (9) comprise a weakened area to facilitate the manually breaking of the connecting members.

4. Strip according to claim 3, wherein the weakened area comprises a weakening recess.

5. Strip according to any one of the preceding claims, wherein the connecting members and the plant support units are integrally formed as a single piece.

6. Strip according to any one of the preceding claims, wherein the connecting members are aligned along a straight member line.

7. Strip according to any one of the preceding claims, wherein the cooperating locking members (6) comprise at least one through hole provided in the support portion and a locking protrusion provided on the fixing portion, which locking protrusion is configured to extend through the at least one through hole to hold the support portion in the support loop position.

8. Strip according to claim 7, wherein the fixing portion comprises an outer fixing surface and the locking protrusion extends away from the outer fixing surface.

9. Strip according to claim 8, wherein the locking protrusion comprises;
- a base part attached to the outer fixing surface and extending away from the outer fixing surface,
- a first transversal part extending transverse away from the base part in a first transversal direction at a first part distance from the outer fixing surface, and
- a second transversal part extending transverse away from the base part in a second transversal direction at a second part distance from the outer fixing surface, wherein the second transversal direction is opposite to the first transversal direction.

10. Strip according to claim 9, wherein the first transversal direction and the second transversal direction extend perpendicular to the longitudinal space axis.

11. Strip according to any one of the preceding claims, wherein the strip comprises between, and including, 2 and 10 plant support units, preferably between, and including, 3 and 8 plant support units, and more preferably between, and including, 4 and 6 plant support units.

12. Kit of parts comprising a strip (1) according to any one of the preceding claims and a cylindrical support, wherein the fixing portions are configured to engage the cylindrical support.

13. A box holding a stack of multiple strips (1) according to any one of the claims 1-11, wherein the strips are positioned on top of each other in sets of two strips, and in each of said sets the inner support surfaces of the two strips are facing each other and the fixing portions of one strip are positioned at the free ends of the other strip and the free ends of said one strip are positioned at the fixing portions of said other strip.

## Patentansprüche

1. Band (1) mit mehreren Pflanzenstützeinheiten (2) zum Stützen eines Pflanzstammes (3) einer Pflanze, wobei jede Pflanzstützeinheit Folgendes umfasst;
- einen Befestigungsabschnitt (5), der so konfiguriert ist, dass er einen zylindrischen Träger (20) erfasst, der in einem zylindrischen Innenraum (17) aufgenommen ist, der eine Raumlängsachse (18) aufweist und teilweise von dem Befestigungsabschnitt umgeben ist, der eine ringförmige Gestalt und eine radiale Öffnung (19) zum Ermöglichen eines Zugangs zu dem Innenraum aufweist, und
- einen flexiblen, länglichen Stützabschnitt (7), der sich von einem angeschlossenen Ende (34), das an den Befestigungsabschnitt anschließt, zu einem freien Ende (33) erstreckt, wobei
- die Pflanzstützeinheiten nacheinander mit gleicher Ausrichtung und in einem Abstand D voneinander positioniert sind, und
- benachbarte Pflanzstützeinheiten durch ein manuell aufbrechbares Verbindungselement (9) miteinander verbunden sind, **dadurch gekennzeichnet, dass**
- jede Pflanzstützeinheit (2) zusammenwirkende Verriegelungselemente (6) umfasst, um den Stützabschnitt in einer Stützringposition (8) zu verriegeln, in der die Pflanzstützeinheit einen geschlossenen Ring bildet, um den Pflanzenstamm zu stützen,
- eine Befestigungsabschnitts-Steifigkeit der Befestigungsabschnitte (5) größer ist als eine Stützabschnitts-Steifigkeit der Stützabschnitte (7), und
- die Verbindungselemente (9) an den Befestigungsabschnitten (5) benachbarter Pflanzstützeinheiten befestigt sind oder an den angeschlossenen Enden (34) benachbarter Pflanzstützeinheiten befestigt sind.

2. Band nach Anspruch 1, wobei
- die Befestigungsabschnitte haben eine Befestigungsabschnitts-Dicke,
- die Stützabschnitte haben eine Stützabschnitts-Dicke,
- die Befestigungsabschnitts-Dicke (41) und die Stützabschnitts-Dicke (42) werden gemessen in einer Richtung senkrecht zur Raumlängsachse, und
- die Befestigungsabschnitts-Dicke ist größer als die Stützabschnitts-Dicke.

3. Band nach einem der vorhergehenden Ansprüche, wobei die Verbindungselemente (9) einen geschwächten Bereich aufweisen, um das manuelle Brechen der Verbindungselemente zu erleichtern.

4. Band nach Anspruch 3, wobei der geschwächte Bereich eine Schwächungsaussparung umfasst.

5. Band nach einem der vorhergehenden Ansprüche, wobei die Verbindungselemente und die Pflanzstützeinheiten einteilig ausgebildet sind.

6. Band nach einem der vorhergehenden Ansprüche, wobei die Verbindungselemente entlang einer geraden Bauteil-Linie ausgerichtet sind.

7. Band nach einem der vorhergehenden Ansprüche, wobei die zusammenwirkenden Verriegelungselemente (6) mindestens ein Durchgangsloch, das in dem Stützabschnitt vorgesehen ist, und einen Verriegelungsvorsprung, der an dem Befestigungsabschnitt vorgesehen ist, umfassen, wobei der Verriegelungsvorsprung so konfiguriert ist, dass er sich durch das mindestens eine Durchgangsloch erstreckt, um den Stützabschnitt in der Stützringposition zu halten.

8. Band nach Anspruch 7, wobei der Befestigungsabschnitt eine äußere Befestigungsfläche aufweist und der Verriegelungsvorsprung sich von der äußeren Befestigungsfläche weg erstreckt.

9. Band nach Anspruch 8, wobei der Verriegelungsvorsprung Folgendes umfasst;
- einen Basisabschnitt, der an die äußere Befestigungsfläche anschließt und sich weg von der äußeren Befestigungsfläche erstreckt,
- einen ersten Querabschnitt, der sich quer von dem Basisabschnitt in einer ersten Querrichtung in einem ersten Teilabstand von der äußeren Befestigungsfläche erstreckt, und
- einen zweiten Querabschnitt, der sich quer von dem Basisabschnitt in einer zweiten Querrichtung in einem zweiten Teilabstand von der äußeren Befestigungsfläche erstreckt, wobei die zweite Querrichtung der ersten Querrichtung entgegengesetzt ist.

10. Band nach Anspruch 9, wobei die erste Querrichtung und die zweite Querrichtung senkrecht zur Raumlängsachse verlaufen.

11. Band nach einem der vorhergehenden Ansprüche, wobei das Band zwischen, und einschließlich, 2 und 10 Pflanzstützeinheiten, vorzugsweise zwischen, und einschließlich, 3 und 8 Pflanzstützeinheiten, weiter vorzugsweise zwischen, und einschließlich, 4 und 6 Pflanzstützeinheiten umfasst.

12. Bausatz mit einem Band (1) nach einem der vorhergehenden Ansprüche und einem zylindrischen Träger, wobei die Befestigungsabschnitte so eingerichtet sind, dass sie in den zylindrischen Träger umgreifen.

13. Behältnis, welches einen Stapel mehrerer Bänder (1) nach einem der Ansprüche 1-11 enthält, wobei die Bänder in Sätzen von zwei Bändern übereinander angeordnet sind und in jedem der Sätze die inneren Stützflächen der beiden Bänder einander zugewandt sind und die Befestigungsabschnitte eines Bandes an den freien Enden des anderen Bandes und die freien Enden des einen Bandes an den Befestigungsabschnitten des anderen Bandes angeordnet sind.

## Revendications

1. Bande (1) comprenant de multiples unités de support de plante (2) pour supporter une tige (3) d'une plante, dans laquelle chaque unité de support de plante comprend :
- une partie de fixation (5) configurée pour s'engager avec un support cylindrique (20) reçu dans un espace intérieur (17) cylindrique ayant un axe d'espace longitudinal (18) et étant partiellement entouré par la partie de fixation ayant une forme annulaire et une ouverture radiale (19) permettant d'accéder à l'espace intérieur, et
- une partie de support (7) flexible et allongée s'étendant d'une extrémité attachée (34) qui est attachée à la partie de fixation jusqu'à une extrémité libre (33), dans laquelle
- les unités de support de plante sont positionnées l'une après l'autre avec une même orientation et à une distance D l'une de l'autre, et
-- les unités de support de plante voisines sont reliées entre elles par un élément de liaison (9) cassable manuellement, **caractérisé en ce que**
--- chaque unité de support de plante (2) comprend des éléments de verrouillage coopérants (6) pour verrouiller la partie de support dans une position de boucle de support (8) dans laquelle l'unité de support de plante forme une boucle fermée pour supporter la tige de plante,
- une rigidité de partie de fixation des parties de fixation (5) est plus grande qu'une rigidité de partie de support des parties de support (7), et
- les éléments de liaison (9) sont attachés aux parties de fixation (5) d'unités de support voisines ou aux extrémités attachées (34) d'unités de support de plantes voisines.

2. Bande selon la revendication 1, dans laquelle
- les parties de fixation ont une épaisseur de partie de fixation,
- les parties de support ont une épaisseur de partie de support,
- l'épaisseur de la partie de fixation (41) et l'épaisseur de la partie de support (42) sont mesurées dans une direction perpendiculaire à l'axe d'espace longitudinal, et
- l'épaisseur de partie de fixation est plus grande que l'épaisseur de partie de support.

3. Bande selon l'une quelconque des revendications précédentes, dans laquelle les éléments de liaison (9) comprennent une zone affaiblie pour faciliter la rupture manuelle des éléments de liaison.

4. Bande selon la revendication 3, dans laquelle la zone affaiblie comprend un creux d'affaiblissement.

5. Bande selon l'une quelconque des revendications précédentes, dans laquelle les éléments de liaison et les unités de support de plante sont formées intégralement d'une seule pièce.

6. Bande selon l'une quelconque des revendications précédentes, dans laquelle les éléments de liaison sont alignés le long d'une ligne droite d'élément.

7. Bande selon l'une quelconque des revendications précédentes, dans laquelle les éléments de verrouillage coopérants (6) comprennent au moins un trou traversant dans la partie de support et une saillie de verrouillage fournie sur la partie de fixation, cette saillie de verrouillage étant configurée pour s'étendre à travers l'au moins un trou traversant pour maintenir la partie de support dans la position de boucle de support.

8. Bande selon la revendication 7, dans laquelle la partie de fixation comprend une surface de fixation extérieure et la saillie de verrouillage s'étend à l'écart de la surface de fixation extérieure.

9. Bande selon la revendication 8, dans laquelle la saillie de verrouillage comprend :
- une partie de base attachée à la surface de fixation extérieure et s'étendant à l'écart de la surface de fixation extérieure,
- une première partie transversale s'étendant transversalement à l'écart de la partie de base dans une première direction transversale à une première distance de partie de la surface de fixation extérieure, et
- une deuxième partie transversale s'étendant transversalement à l'écart de la partie de base dans une deuxième direction transversale à une deuxième distance de partie de la surface de fixation extérieure, dans laquelle la deuxième direction transversale est opposée à la première direction transversale.

10. Bande selon la revendication 9, dans laquelle la première direction transversale et la deuxième direction transversale s'étendent perpendiculairement à l'axe d'espace longitudinal.

11. Bande selon l'une quelconque des revendications précédentes, dans laquelle la bande comprend entre, et incluant, 2 et 10 unités de support de plante, de préférence entre, et incluant, 3 et 8 unités de support de plante, et plus préférablement entre, et incluant, 4 et 6 unités de support de plante.

12. Kit de pièces comprenant une bande (1) selon l'une quelconque des revendications précédentes et un support cylindrique, dans lequel les parties de fixation sont configurées pour s'engager avec le support cylindrique.

13. Boîte contenant une pile de multiples bandes (1) selon l'une quelconque des revendications 1 à 11,
dans laquelle les bandes sont placées les unes au-dessus des autres en ensembles de deux bandes, et dans chacun de ces ensembles les surfaces de support intérieures des deux bandes sont en face l'une de l'autre et les parties de fixation d'une bande sont positionnées aux niveaux des extrémités libres de l'autre bande et les extrémités libres de ladite une bande sont positionnées aux niveaux des parties de fixation de ladite autre bande.
